# FASCICULE DE BREVET EUROPEEN

(11) **EP 2 259 708 B1**
(45) Date de publication et mention de la délivrance du brevet: **24.10.2012**
(21) Numéro de dépôt: 09721806.9
(22) Date de dépôt: 16.02.2009
(51) Int. Cl.: A47J 43/07, A47J 43/04

(54) **APPAREIL ELECTROMENAGER DE PREPARATION CULINAIRE POUR REALISER DES PREPARATIONS LIQUIDES**
HAUSHALTSKOCHGERÄT ZUR HERSTELLUNG VON FLÜSSIGKEITSMIXTUREN
DOMESTIC COOKING APPLIANCE FOR MAKING LIQUID CONCOCTIONS

(30) Priorité: 20.02.2008 FR 0800914
(43) Date de publication de la demande: 15.12.2010
(73) Titulaire: SEB S.A., 69130 Ecully (FR)
(72) Inventeur: PERRIER, Matthieu, F-65310 Laloubere (FR); ROUCHES, Alexandre, F-65310 Horgues (FR)
(74) Mandataire: Cémeli, Eric Philippe Laurent
(86) Numéro de dépôt international: PCT/FR2009/000170
(87) Numéro de publication internationale: WO 2009/115677

(56) Documents cités:
- EP-A- 1 656 867
- US-A- 2 222 601
- US-A- 4 708 487
- US-A- 4 872 764

## Description

La présente invention concerne le domaine technique des appareils électroménagers de préparation culinaire comportant un outil de travail rotatif agencé dans un récipient, et un boîtier moteur supérieur prévu pour entraîner ledit outil de travail rotatif.

La présente invention concerne plus particulièrement les appareils du type précité prévus pour la réalisation de préparations liquides.

Il est connu du document US 4 872 764 un appareil du type précité comportant un outil de travail rotatif monté suspendu dans un récipient de travail dépourvu de nervures internes. L'outil de travail rotatif présente un axe central sur lequel sont montées deux lames relevables. Toutefois l'une des lames est agencée à proximité du fond du récipient de travail et l'autre lame est agencée dans la partie inférieure de la zone médiane du récipient de travail. Cette disposition présente l'inconvénient de laisser particulièrement apparentes les lames de l'outil de travail rotatif lorsque le bloc moteur portant l'outil de travail rotatif est retiré du récipient de travail. L'utilisateur doit être vigilant lors du retrait de l'outil de travail rotatif du récipient de travail.

Un appareil selon le préambule de la revendication 1 est connu du document US 4 708 487.

Un objet de la présente invention est de proposer un appareil électroménager de préparation culinaire du type précité, qui soit plus simple à utiliser.

Un autre objet de la présente invention est de proposer un appareil électroménager de préparation culinaire du type précité, qui soit plus sûr à utiliser.

Un autre objet de la présente invention est de proposer un appareil électroménager de préparation culinaire du type précité, qui permette d'obtenir une bonne homogénéité de préparation.

Un autre objet de la présente invention est de proposer un appareil électroménager de préparation culinaire du type précité, qui permette de faciliter la consommation de la préparation obtenue.

Ces buts sont atteints avec un appareil électroménager de préparation culinaire, comportant un récipient de travail et une partie motorisée formant une enceinte de travail fermée logeant un outil de travail rotatif suspendu à la partie motorisée, l'outil de travail rotatif présentant un organe de coupe entraîné par un axe traversant de manière étanche une paroi de support d'axe délimitant partiellement l'enceinte de travail, du fait que l'outil de travail rotatif présente un organe de mélange, que l'organe de coupe est agencé entre la paroi de support d'axe et l'organe de mélange, et que la partie motorisée comporte une paroi annulaire entourant au moins partiellement l'outil de travail. Cette disposition permet de protéger l'outil de travail rotatif. Cette disposition permet de réduire les dimensions de l'axe et de rendre moins apparent l'organe de coupe. Ainsi l'organe de coupe est moins exposé, ce qui permet de simplifier la manipulation de l'appareil ; une bonne qualité de préparation peut être obtenue grâce à l'organe de mélange envoyant la préparation au contact de l'organe de coupe.

Avantageusement, l'organe de coupe s'étend dans la moitié de l'enceinte de travail adjacente à la partie motorisée. Cette disposition contribue à réduire l'encombrement de la partie motorisée retirée du récipient de travail.

Avantageusement encore, l'organe de mélange s'étend dans la moitié de l'enceinte de travail adjacente à la partie motorisée. Cette disposition contribue à réduire encore davantage l'encombrement de la partie motorisée retirée du récipient de travail

Avantageusement encore, l'organe de mélange s'étend transversalement de part et d'autre de l'axe. Cette disposition contribue à simplifier la construction de l'appareil tout en permettant une bonne qualité de mélange.

Avantageusement encore, l'organe de coupe s'étend au moins partiellement autour de l'organe de mélange. En d'autres termes, l'organe de coupe et l'organe de mélange présentent axialement une zone de travail commune. Cette disposition contribue à augmenter l'efficacité du mélange et du mixage de la préparation.

Avantageusement, la paroi annulaire entoure l'organe de coupe. Cette disposition permet de limiter le contact de l'utilisateur avec l'organe de coupe.

Selon une réalisation avantageuse, l'enceinte de travail comporte une paroi latérale présentant une nervure latérale issue de la partie motorisée et s'étendant au moins partiellement en regard de l'outil de travail rotatif. Cette disposition contribue à améliorer l'efficacité du mélange de la préparation, tout en permettant de conserver un récipient de travail dépourvu de nervure latérale.

Avantageusement alors ladite nervure latérale présente un bord incliné par rapport à la direction axiale de l'outil de travail rotatif. Cette disposition s'avère plus efficace que l'utilisation d'une nervure droite.

Avantageusement encore, ladite nervure latérale est agencée à l'intérieur de ladite paroi annulaire. Cette disposition permet d'améliorer la résistance de la nervure même avec une épaisseur de nervure peu importante.

Selon une réalisation avantageuse la partie motorisée comporte un boîtier logeant un moteur ainsi qu'une coupelle portant l'outil de travail rotatif. Cette disposition permet de faciliter le nettoyage de l'outil de travail rotatif.

Avantageusement alors la coupelle est assemblée de manière amovible avec le boîtier. Cette disposition permet de simplifier l'utilisation de l'appareil. L'utilisateur peut réaliser plusieurs préparations successives en retirant simplement la partie motorisée du récipient de travail.

Selon une disposition avantageuse la paroi annulaire est issue de la coupelle.

Avantageusement encore la partie motorisée est assemblée de manière amovible avec le récipient de travail. Cette disposition permet d'utiliser plus facilement l'appareil dans différentes positions. Notamment il est possible de secouer l'appareil contenant la préparation, comme avec un shaker.

Avantageusement alors le boîtier est assemblé de manière amovible avec le récipient de travail. Cette disposition permet une meilleure résistance de l'appareil assemblé.

Selon un mode de réalisation avantageux, le boîtier et le récipient de travail sont assemblés par vissage. D'autres modes de réalisation peuvent être envisagés pour l'assemblage du boîtier et du récipient de travail, notamment un assemblage par baïonnette.

Selon une forme de réalisation avantageuse, le récipient de travail supporte la partie motorisée. Ainsi l'outil rotatif est suspendu à la partie motorisée. Avantageusement alors, l'outil rotatif est suspendu à la coupelle.

L'invention sera mieux comprise à l'étude de deux exemples de réalisation, pris à titre nullement limitatif, illustrés dans les figures annexées, dans lesquelles :
- la figure 1 est une vue en perspective d'un premier exemple de réalisation d'un appareil électroménager de préparation culinaire selon l'invention,
- la figure 2 est une vue en perspective de dessous d'une coupelle de l'appareil électroménager de préparation culinaire illustré sur la figure 1,
- la figure 3 est une vue partielle en coupe longitudinale de l'appareil électroménager de préparation culinaire illustré sur la figure 1,
- la figure 4 est une vue en coupe longitudinale d'un deuxième exemple de réalisation d'un appareil électroménager de préparation culinaire selon l'invention,
- la figure 5 est une vue en coupe longitudinale selon la perpendiculaire à la vue précédente de la partie supérieure de l'appareil électroménager de préparation culinaire illustré sur la figure 4,
- la figure 6 est une vue partielle en perspective de la partie supérieure de l'appareil électroménager de préparation culinaire illustrée sur la figure 5,
- la figure 7 est une vue en perspective de dessous de la coupelle de l'appareil électroménager de préparation culinaire illustré sur la figure 4.

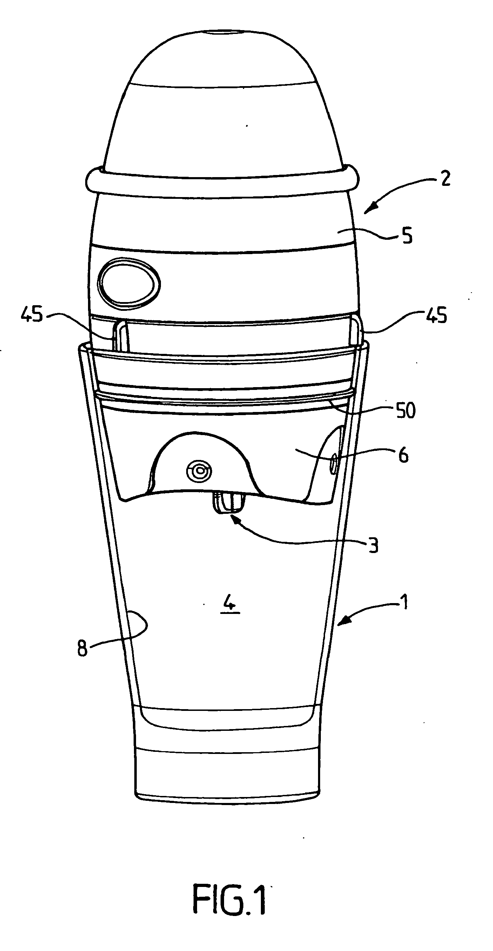

L'appareil électroménager de préparation culinaire illustré sur les figures 1 à 3 comporte un récipient de travail 1 et une partie motorisée 2 comprenant un outil de travail rotatif 3. Le récipient de travail 1 et la partie motorisée 2 forment une enceinte de travail 4 logeant l'outil de travail rotatif 3. La partie motorisée 2 repose sur le récipient de travail 1. Le récipient de travail 1 supporte la partie motorisée 2. Ainsi l'outil rotatif 3 est suspendu à la partie motorisée 2.

Le récipient de travail 1 est avantageusement réalisé en verre. Le récipient de travail 1 présente une géométrie de révolution et est dépourvu de nervure interne. Le récipient de travail 1 présente une forme tronconique avec une hauteur supérieure au diamètre de l'ouverture supérieure et de préférence au moins 1,5 fois supérieure au diamètre de l'ouverture supérieure.

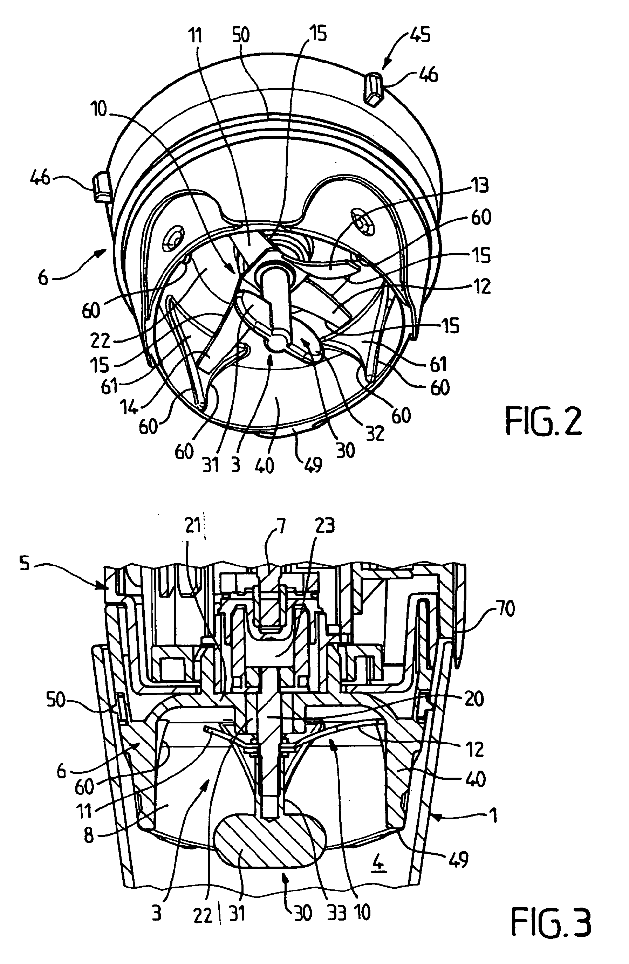

Tel que mieux visible sur les figures 2 et 3, la partie motorisée 2 comporte un boîtier 5 logeant un moteur, ainsi qu'une coupelle 6 portant l'outil de travail rotatif 3. La coupelle 6 est avantageusement assemblée de manière amovible avec le boîtier 5, par exemple au moyen d'un assemblage à baïonnette ou en utilisant un crochet de verrouillage monté mobile tel que décrit dans le document WO98/24350.

L'outil de travail rotatif 3 présente un organe de coupe 10 entraîné par un axe 20 traversant une paroi de support d'axe 21 délimitant partiellement l'enceinte de travail 4. Plus particulièrement, l'axe 20 est logé dans un palier 22 monté dans la paroi de support d'axe 21 appartenant à la coupelle 6. Ainsi l'outil rotatif 3 est suspendu à la coupelle 6 ; l'axe 20 traverse de manière étanche la paroi de support d'axe 21. L'axe 20 est prolongé par un organe d'entraînement 23 prévu pour venir en prise avec un axe entraîneur 7 issu du moteur. L'organe de coupe 10 s'étend préférentiellement dans la moitié de l'enceinte de travail 4 adjacente à la partie motorisée 2.

Tel que représenté sur les figures 2 et 3, l'organe de coupe 10 comporte deux lames inférieures 11, 12 inclinées en direction de la paroi de support d'axe 21 de la coupelle 6 et deux lames supérieures 13, 14 inclinées s'écartant de la paroi de support d'axe 21. Ainsi l'organe de coupe comporte au moins une lame présentant un bord d'attaque 15. Les lames inférieures 11, 12 sont agencées de manière opposée ; les lames supérieures 13, 14 sont agencées de manière opposée perpendiculairement aux lames inférieures 11, 12.

L'outil de travail rotatif 3 présente un organe de mélange 30. L'organe de coupe 10 est agencé entre la paroi de support d'axe 21 et l'organe de mélange 30. Plus particulièrement, l'organe de mélange 30 est monté sur l'extrémité libre de l'axe 20. L'organe de mélange 30 s'étend préférentiellement dans la moitié de l'enceinte de travail 4 adjacente à la partie motorisée 2. Tel que représenté sur les figures 2 et 3, l'organe de mélange 30 s'étend transversalement de part et d'autre de l'axe 20. L'organe de mélange 30 comporte une palette 31 s'étendant de part et d'autre de l'axe 20. Ainsi l'organe de mélange 30 comporte au moins une face d'attaque 32 s'étendant selon une direction principalement perpendiculaire à l'axe 20 de l'outil de travail rotatif 3. La palette 31 est issue d'une tubulure 33 montée sur l'extrémité libre de l'axe 20. L'organe de coupe 10 s'étend au moins partiellement autour de l'organe de mélange 30. Notamment, les lames supérieures 13, 14 s'étendent de part et d'autre de l'organe de mélange 30.

De préférence, l'organe de mélange 30 s'étend au moins partiellement en dessous d'un niveau de remplissage minimum conseillé de l'enceinte de travail 4 lorsque la partie motorisée 2 est placée sur le récipient de travail 1. L'organe de coupe 10 peut s'étendre au moins partiellement au dessus dudit niveau de remplissage minimum conseillé.

La partie motorisée 2 comporte une paroi annulaire 40 entourant au moins partiellement l'outil de travail rotatif 3. La paroi annulaire 40 est issue de la coupelle 6 et prolonge la paroi de support d'axe 21. La paroi annulaire 40 entoure l'organe de coupe 10.

La partie motorisée 2 comporte des moyens d'appui 45 prévus pour reposer sur le récipient de travail 1. Tel que représenté sur les figures 1 et 2 les moyens d'appui 45 sont formés par des ergots 46 issus de la coupelle 6 et prévus pour prendre appui sur un bord supérieur du récipient de travail 1.

La partie motorisée 2 comporte un joint 50 prévu pour coopérer avec le récipient de travail 1. Le joint 50 est disposé sur la périphérie de la coupelle 6. Tel que bien visible sur la figure 1, l'enceinte de travail 4 formée par le récipient de travail 1 et la partie motorisée 2 est fermée et loge l'outil de travail rotatif 3.

L'enceinte de travail 4 comporte une paroi latérale 8 présentant des nervures latérales 60 issues de la partie motorisée 2. La paroi latérale 8 est formée en partie par le récipient de travail 1 et en partie par la paroi annulaire 40 de la coupelle 6. La coupelle 6 présente un bord annulaire 49 disposé à distance du récipient de travail 1. Les extrémités latérales de l'organe de mélange 30 s'étendent avantageusement jusqu'à une distance comprise entre 1/3 et 2/3 de la distance entre l'axe 20 et les nervures latérales 60. Les nervures latérales 60 s'étendent au moins partiellement en regard de l'outil de travail rotatif 3. Plus particulièrement, les nervures latérales 60 présentent un bord incliné par rapport à la direction axiale de l'outil de travail rotatif 3. Les nervures latérales 60 sont formées par des protubérances 61 présentant une configuration triangulaire. Les nervures latérales 60 sont agencées à l'intérieur de la paroi annulaire 40. Les nervures latérales 60 sont issues de la paroi de support d'axe 21 et s'étendent jusqu'au bord annulaire 49 de la paroi annulaire 40.

La partie motorisée 2 présente un dispositif de sécurité prévu pour détecter la présence du récipient de travail 1. A cet effet le boîtier 5 présente un organe de commande 70 repoussé par le bord supérieur du récipient de travail 1 et prévu pour actionner un interrupteur autorisant le fonctionnement du moteur.

L'appareil électroménager de préparation culinaire illustré sur les figures 1 à 3 fonctionne et s'utilise de la manière suivante.

L'utilisateur peut si désiré assembler le boîtier 5 et la coupelle 6 pour manipuler la partie motorisée 2. L'utilisateur remplit le récipient de travail 1 avec les ingrédients prévus pour la préparation à réaliser avec de préférence un niveau de liquide atteignant l'organe de mélange 30. Le caractère transparent ou translucide du récipient de travail 1 facilite la vérification du niveau de remplissage de l'enceinte de travail 4.

L'outil de travail rotatif 3 au contact du liquide présent dans l'enceinte de travail 4 permet d'assurer à la fois le broyage et le mélange de la préparation. L'organe de mélange 30 propulse la préparation vers l'organe de coupe 10 sans qu'il soit nécessaire d'incliner ou de retourner l'appareil. De plus l'organe de mélange 30 propulse la préparation vers les nervures latérales 60 qui perturbent l'écoulement de la préparation et favorisent le recyclage de la préparation dans l'enceinte de travail 4 et son mixage par l'organe de coupe 10. Les aliments solides présents dans le fond du récipient de travail 1 peuvent ainsi être dirigés vers l'organe de coupe 10 sans utiliser de contact entre l'outil de travail rotatif 3 et le récipient de travail 1. Une préparation bien homogène peut être obtenue.

Lorsque la préparation est réalisée, l'utilisateur peut retirer la partie motorisée 2 dépourvue d'organe coupant apparent. L'appareil est simple et sûr à utiliser, et permet d'obtenir une bonne homogénéité de préparation. L'utilisateur peut consommer la préparation réalisée directement dans le récipient de travail 1.

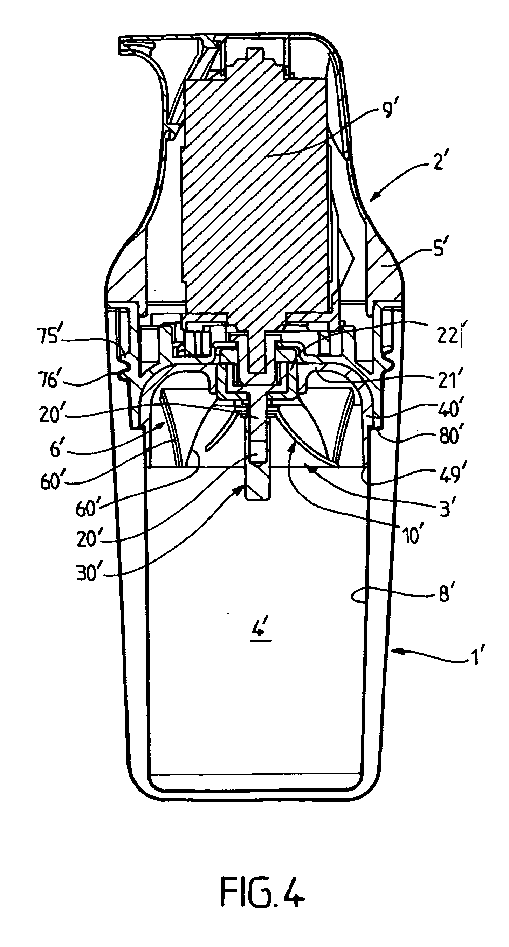

L'appareil électroménager de préparation culinaire illustré sur les figures 4 à 7 comporte un récipient de travail 1' et une partie motorisée 2' comprenant un outil de travail rotatif 3'. La partie motorisée 2' comporte une paroi annulaire 40' entourant au moins partiellement l'outil de travail rotatif 3'. Le récipient de travail 1' et la partie motorisée 2' forment une enceinte de travail 4' fermée logeant l'outil de travail rotatif 3', tel que bien visible sur la figure 4.

L'enceinte de travail 4' comporte une paroi latérale 8' présentant des nervures latérales 60' issues de la partie motorisée 2' et s'étendant au moins partiellement en regard de l'outil de travail rotatif 3'. La paroi latérale 8' est formée en partie par le récipient de travail 1' et en partie par la paroi annulaire 40' de la coupelle 6'. La coupelle 6' présente un bord annulaire 49' disposé au voisinage du récipient de travail 1'. Les nervures latérales 60' présentent un bord incliné par rapport à la direction axiale de l'outil de travail rotatif 3'. Les nervures latérales 60' sont agencées à l'intérieur de la paroi annulaire 40'.

La partie motorisée 2' comporte un boîtier 5' logeant un moteur 9' ainsi qu'une coupelle 6' portant l'outil de travail rotatif 3'. La coupelle 6' est assemblée de manière amovible avec le boîtier 5'. La partie motorisée 2' peut également présenter un dispositif de sécurité, non représenté sur les figures, prévu pour détecter la présence du récipient de travail 1'.

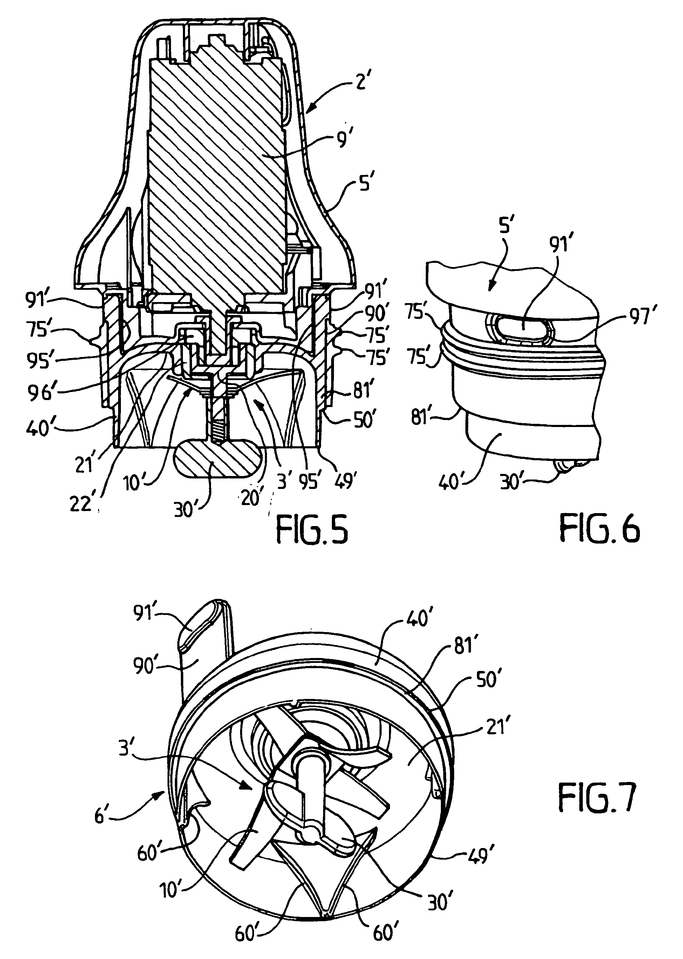

L'outil de travail rotatif 3' présente un organe de coupe 10' entraîné par un axe 20' traversant une paroi de support d'axe 21'. L'organe de coupe 10' présente une construction comparable à la construction de l'organe de coupe 10 du premier exemple de réalisation illustré sur les figures 1 à 3. Tel que bien visible sur les figures 4 et 5, l'axe 20' est logé dans un palier 22' monté dans la paroi de support d'axe 21' appartenant à la coupelle 6'. Ainsi l'axe 20' traverse de manière étanche la paroi de support d'axe 21'. L'organe de coupe 10' s'étend dans la moitié de l'enceinte de travail 4' adjacente à la partie motorisée 2'. La paroi annulaire 40' entoure l'organe de coupe 10'. L'outil de travail rotatif 3' présente un organe de mélange 30' comparable à l'organe de mélange 30 du premier exemple de réalisation illustré sur les figures 1 à 3. L'organe de mélange 30' s'étend dans la moitié de l'enceinte de travail 4' adjacente à la partie motorisée 2'. L'organe de mélange 30' s'étend transversalement de part et d'autre de l'axe 20'. L'organe de coupe 10' est agencé entre la paroi de support d'axe 21' et l'organe de mélange 30'. L'organe de coupe 10' s'étend au moins partiellement autour de l'organe de mélange 30'.

L'appareil illustré sur les figures 4 à 7 diffère de l'appareil illustré sur les figures 1 à 3 notamment en ce que la partie motorisée 2' est assemblée de manière amovible avec le récipient de travail 1'. Plus particulièrement, le boîtier 5' est assemblé de manière amovible avec le récipient de travail 1'. A cet effet le boîtier 5' présente des filetages externes 75' et le récipient de travail 1' présente des filetages internes 76'. Ainsi tel que représenté sur la figure 4, le boîtier 5' et le récipient de travail 1' sont assemblés par vissage.

Par ailleurs le récipient de travail 1' est un récipient à double paroi. Le récipient de travail 1' est avantageusement réalisé en acier inoxydable. Le récipient de travail 1' présente un épaulement interne 80' prévu pour recevoir un épaulement externe 81' de la partie motorisée 2'. Plus particulièrement, l'épaulement externe 81' est ménagé sur la paroi annulaire 40' de la coupelle 6'. La partie motorisée 2' comporte un joint 50' prévu pour coopérer avec le récipient de travail 1'. Le joint 50' est avantageusement prévu sur l'épaulement externe 81'. Le vissage du boîtier 5' avec le récipient de travail 1' permet d'obtenir une bonne étanchéité de l'enceinte de travail 4'. L'épaulement externe 81' de la partie motorisée 2' appartient à la paroi annulaire 40' de la coupelle 6'.

La coupelle 6' présente des pattes 90' munies d'ergots 91' prévues pour être insérées chacune dans un conduit 95' du boîtier 5' débouchant autour d'un organe d'entraînement 96' entraîné par le moteur 9'. Chacun des conduits 95' présente une fenêtre latérale 97' prévue pour recevoir les ergots 91'. La séparation du boîtier 5' et de la coupelle 6' est obtenue en repoussant les ergots 91' dans le boîtier 5'.

L'appareil illustré sur les figures 4 à 7 peut ainsi être utilisé après vissage du boîtier 5' sur le récipient de travail 1' non seulement avec le boîtier 5' disposé verticalement au dessus du récipient de travail 1', mais aussi dans toute autre orientation. Tel que représenté sur la figure 4, le récipient de travail 1' supporte la partie motorisée 2'. Ainsi l'outil rotatif 3' est suspendu à la partie motorisée 2'. Plus particulièrement, l'outil rotatif 3' est suspendu à la coupelle 6'.

A titre de variante, l'organe de mélange 30 ; 30' pourrait présenter au moins une pale inclinée par rapport au plan passant par l'axe 20 ; 20', notamment si le récipient de travail présente une forme cylindrique.

A titre de variante le récipient de travail 1 ; 1' ne présente pas nécessairement une forme tronconique.

A titre de variante, les nervures latérales 60 ; 60' ne sont pas nécessairement au moins partiellement issues d'une paroi latérale 8 ; 8' appartenant à la partie motorisée 2 ; 2', mais pourraient appartenir au moins partiellement au récipient de travail 1 ; 1'.

A titre de variante, la partie motorisée 2 ; 2' pourrait être dépourvue de paroi annulaire 40 ; 40'. Les nervures latérales 60 ; 60' issues de la partie motorisée 2 ; 2' pourraient alors si désiré être agencées contre la paroi latérale du récipient de travail 1:1'.

A titre de variante, l'enceinte de travail 4 ; 4' pourrait comporter une paroi latérale présentant au moins une nervure latérale 60 ; 60', ladite paroi latérale appartenant à la partie motorisée 2 ; 2' et/ou au récipient de travail 1 ; 1'.

A titre de variante, l'organe de mélange 30 ; 30' n'est pas nécessairement entraîné par l'axe 20 ; 20', mais pourrait notamment être entraîné par un autre axe disposé à l'intérieur de l'axe 20 ; 20' de préférence coaxialement à l'axe 20 ; 20'. Avantageusement alors, l'organe de mélange et l'organe de coupe peuvent être entraînés à des vitesses différentes et/ou dans des sens différents. Si désiré, l'organe de mélange et/ou l'organe de coupe peuvent ainsi être entraînés seuls, l'autre organe restant immobile.

A titre de variante, d'autres modes d'assemblage démontable pourraient être envisagés entre la partie motorisée et le récipient de travail.

A titre de variante, d'autres modes d'assemblage démontable pourraient être envisagés entre la coupelle et le boîtier.

La présente invention n'est nullement limitée aux exemples de réalisation décrits et à leurs variantes, mais englobe de nombreuses modifications dans le cadre des revendications.

## Revendications

1. Appareil électroménager de préparation culinaire, comportant un récipient de travail (1 ; 1') et une partie motorisée (2 ; 2') formant une enceinte de travail (4 ; 4') fermée logeant un outil de travail rotatif (3 ; 3') suspendu à la partie motorisée (2 ; 2'), l'outil de travail rotatif (3 ; 3') présentant un organe de coupe (10 ; 10') entraîné par un axe (20 ; 20') traversant de manière étanche une paroi de support d'axe (21 ; 21') délimitant partiellement l'enceinte de travail (4 ; 4'), **caractérisé en ce que** l'outil de travail rotatif (3 ; 3') présente un organe de mélange (30 ; 30'), **en ce que** l'organe de coupe (10 ; 10') est agencé entre la paroi de support d'axe (21 ; 21') et l'organe de mélange (30 ; 30'), et **en ce que** la partie motorisée (2 ; 2') comporte une paroi annulaire (40 ; 40') entourant au moins partiellement l'outil de travail rotatif (3 ; 3').

2. Appareil électroménager de préparation culinaire selon la revendication 1, **caractérisé en ce que** l'organe de coupe (10 ; 10') s'étend dans la moitié de l'enceinte de travail (4 ; 4') adjacente à la partie motorisée (2 ; 2').

3. Appareil électroménager de préparation culinaire selon l'une des revendications 1 ou 2, **caractérisé en ce que** l'organe de mélange (30 ; 30') s'étend dans la moitié de l'enceinte de travail (4 ; 4') adjacente à la partie motorisée (2 ; 2').

4. Appareil électroménager de préparation culinaire selon l'une des revendications 1 à 3, **caractérisé en ce que** l'organe de mélange (30 ; 30') s'étend transversalement de part et d'autre de l'axe (20 ; 20').

5. Appareil électroménager de préparation culinaire selon l'une des revendications 1 à 4, **caractérisé en ce que** l'organe de coupe (10 ; 10') s'étend au moins partiellement autour de l'organe de mélange (30 ; 30').

6. Appareil électroménager de préparation culinaire selon l'une des revendications 1 à 5, **caractérisé en ce que** la paroi annulaire (40 ; 40') entoure l'organe de coupe (10 ; 10').

7. Appareil électroménager de préparation culinaire selon l'une des revendications 1 à 6, **caractérisé en ce que** l'enceinte de travail (4 ; 4') comporte une paroi latérale (8 ; 8') présentant au moins une nervure latérale (60 ; 60') issue de la partie motorisée (2 ; 2') et s'étendant au moins partiellement en regard de l'outil de travail rotatif (3 ; 3').

8. Appareil électroménager de préparation culinaire selon la revendication 7, **caractérisé en ce que** ladite nervure latérale (60 ; 60') présente un bord incliné par rapport à la direction axiale de l'outil de travail rotatif (3 ; 3').

9. Appareil électroménager de préparation culinaire selon l'une des revendications 7 ou 8, **caractérisé en ce que** ladite nervure latérale (60 ; 60') est agencée à l'intérieur de ladite paroi annulaire (40 ; 40').

10. Appareil électroménager de préparation culinaire selon l'une des revendications 1 à 9, **caractérisé en ce que** la partie motorisée (2 ; 2') comporte un boîtier (5 ; 5') logeant un moteur (9') ainsi qu'une coupelle (6 ; 6') portant l'outil de travail rotatif (3 ; 3').

11. Appareil électroménager de préparation culinaire selon la revendication 10, **caractérisé en ce que** la coupelle (6 ; 6') est assemblée de manière amovible avec le boîtier (5 ; 5').

12. Appareil électroménager de préparation culinaire selon l'une des revendications 10 ou 11, **caractérisé en ce que** la paroi annulaire (40 ; 40') est issue de la coupelle (6 ; 6').

13. Appareil électroménager de préparation culinaire selon l'une des revendications 1 à 12, **caractérisé en ce que** la partie motorisée (2') est assemblée de manière amovible avec le récipient de travail (1').

14. Appareil électroménager de préparation culinaire selon l'une des revendications 10 à 12, **caractérisé en ce que** le boîtier (5') est assemblé de manière amovible avec le récipient de travail (1').

## Claims

1. An electrical household appliance for food preparation, comprising a working container (1; 1') and a powered portion (2; 2') forming a closed working area (4; 4') housing a rotary working tool (3; 3') suspended on the powered portion (2; 2'), the rotary working tool (3; 3') having a cutting member (10; 10') driven by an axis (20; 20') extending sealingly across the axis-bearing wall (21; 21') partially delimiting the working area (4; 4'), **characterised in that** the rotary working tool (3; 3') has a mixing member (30; 30'), **in that** the cutting member (10; 10') is arranged between the axis-bearing wall (21; 21') and the mixing member (30; 30'), and **in that** the powered portion (2; 2') comprises an annular wall (40; 40') at least partially surrounding the rotary working tool (3; 3').

2. An electrical household appliance for food preparation according to claim 1, **characterised in that** the cutting member (10; 10') extends into the half of the working area (4; 4') adjacent to the powered portion (2; 2').

3. An electrical household appliance for food preparation according to one of claims 1 or 2, **characterised in that** the mixing member (30; 30') extends into the half of the working area (4; 4') adjacent to the powered portion (2; 2').

4. An electrical household appliance for food preparation according to one of claims 1 to 3, **characterised in that** the mixing member (30; 30') extends transversally on either side of the axis (20; 20').

5. An electrical household appliance for food preparation according to one of claims 1 to 4, **characterised in that** the cutting member (10; 10') extends at least partially around the mixing member (30; 30').

6. An electrical household appliance for food preparation according to one of claims 1 to 5, **characterised in that** the annular wall (40; 40') surrounds the cutting member (10; 10').

7. An electrical household appliance for food preparation according to one of claims 1 to 6, **characterised in that** the working area (4; 4') comprises a side wall (8; 8') having at least one side rib (60; 60') rising from the powered portion (2; 2') and extending at least partially opposite the rotary working tool (3; 3').

8. An electrical household appliance for food preparation according to claim 7, **characterised in that** said side rib (60; 60') has an inclined edge with respect to the axial direction of the rotary working tool (3; 3').

9. An electrical household appliance for food preparation according to one of claims 7 or 8, **characterised in that** said side rib (60; 60') is arranged inside said annular wall (40; 40').

10. An electrical household appliance for food preparation according to one of claims 1 to 9, **characterised in that** the powered portion (2; 2') comprises a housing (5; 5') containing a motor (9') and a cup (6; 6') bearing the rotary working tool (3; 3').

11. An electrical household appliance for food preparation according to claim 10, **characterised in that** the cup (6; 6') is removably assembled with the housing (5; 5').

12. An electrical household appliance for food preparation according to one of claims 10 or 11, **characterised in that** the annular wall (40; 40') rises from the cup (6; 6').

13. An electrical household appliance for food preparation according to one of claims 1 to 12, **characterised in that** the powered portion (2') is removably assembled with the working container (1').

14. An electrical household appliance for food preparation according to one of claims 10 to 12, **characterised in that** the housing (5') is removably assembled with the working container (1').

## Patentansprüche

1. Elektrohaushaltsgerät für kulinarische Zubereitungen, umfassend einen Arbeitsbehälter (1; 1') und einen motorisierten Teil (2; 2'), die einen geschlossenen Arbeitsraum (4; 4') bilden, in dem ein drehendes Arbeitswerkzeug (3; 3') untergebracht ist, das am motorisierten Teil (2; 2') aufgehängt ist, wobei das drehende Arbeitswerkzeug (3; 3') ein Schneidelement (10; 10') aufweist, das von einer Achse (20; 20') angetrieben wird, die auf dichte Weise eine Achsauflagewand (21; 21') durchquert, die den Arbeitsraum (4; 4') teilweise abgrenzt, **dadurch gekennzeichnet, dass** das drehende Arbeitswerkzeug (3; 3') ein Mischelement (30; 30') aufweist, dadurch, dass das Schneidelement (10; 10') zwischen der Achsauflagewand (21; 21') ') und dem Mischelement (30; 30') angeordnet ist, und dadurch, dass der motorisierte Teil (2; 2') eine ringförmige Wand (40; 40') umfasst, die wenigstens teilweise das drehende Arbeitswerkzeug (3; 3') umgibt.

2. Elektrohaushaltsgerät für kulinarische Zubereitungen nach Anspruch 1, **dadurch gekennzeichnet, dass** sich das Schneidelement (10; 10') in jener Hälfte des Arbeitsraumes (4; 4') erstreckt, die an den motorisierten Teil (2; 2') angrenzt.

3. Elektrohaushaltsgerät für kulinarische Zubereitungen nach einem der Ansprüche 1 oder 2, **dadurch gekennzeichnet, dass** sich das Mischelement (30; 30') in jener Hälfte des Arbeitsraumes (4; 4') erstreckt, die an den motorisierten Teil (2; 2') angrenzt.

4. Elektrohaushaltsgerät für kulinarische Zubereitungen nach einem der Ansprüche 1 bis 3, **dadurch gekennzeichnet, dass** sich das Mischelement (30; 30') quer verlaufend auf jeder Seite der Achse (20; 20') erstreckt.

5. Elektrohaushaltsgerät für kulinarische Zubereitungen nach einem der Ansprüche 1 bis 4, **dadurch gekennzeichnet, dass** sich das Schneidelement (10; 10') wenigstens teilweise um das Mischelement (30; 30') herum erstreckt.

6. Elektrohaushaltsgerät für kulinarische Zubereitungen nach einem der Ansprüche 1 bis 5, **dadurch gekennzeichnet, dass** die ringförmige Wand (40; 40') das Schneidelement (10; 10') umgibt.

7. Elektrohaushaltsgerät für kulinarische Zubereitungen nach einem der Ansprüche 1 bis 6, **dadurch gekennzeichnet, dass** der Arbeitsraum (4; 4') eine Seitenwand (8; 8') umfasst, die wenigstens eine seitliche Rippe (60; 60') aufweist, die aus dem motorisierten Teil (2; 2') hervorgeht und sich wenigstens teilweise gegenüber dem drehenden Arbeitswerkzeug (3; 3') erstreckt.

8. Elektrohaushaltsgerät für kulinarische Zubereitungen nach Anspruch 7, **dadurch gekennzeichnet, dass** die seitliche Rippe (60; 60') einen in Bezug auf die axiale Richtung des drehenden Arbeitswerkzeugs (3; 3') schräg verlaufenden Rand aufweist.

9. Elektrohaushaltsgerät für kulinarische Zubereitungen nach einem der Ansprüche 7 oder 8, **dadurch gekennzeichnet, dass** die seitliche Rippe (60; 60') innerhalb der ringförmigen Wand (40; 40') angeordnet ist.

10. Elektrohaushaltsgerät für kulinarische Zubereitungen nach einem der Ansprüche 1 bis 9, **dadurch gekennzeichnet, dass** der motorisierte Teil (2; 2') ein Gehäuse (5; 5'), in dem ein Motor (9') untergebracht ist, sowie eine Schale (6; 6') umfasst, die das drehende Arbeitswerkzeug (3; 3') trägt.

11. Elektrohaushaltsgerät für kulinarische Zubereitungen nach Anspruch 10, **dadurch gekennzeichnet, dass** die Schale (6; 6') abnehmbar mit dem Gehäuse (5; 5') verbunden ist.

12. Elektrohaushaltsgerät für kulinarische Zubereitungen nach einem der Ansprüche 10 oder 11, **dadurch gekennzeichnet, dass** die ringförmige Wand (40; 40') aus der Schale (6; 6') hervorgeht.

13. Elektrohaushaltsgerät für kulinarische Zubereitungen nach einem der Ansprüche 1 bis 12, **dadurch gekennzeichnet, dass** der motorisierte Teil (2') abnehmbar mit dem Arbeitsbehälter (1') verbunden ist.

14. Elektrohaushaltsgerät für kulinarische Zubereitungen nach einem der Ansprüche 10 bis 12, **dadurch gekennzeichnet, dass** das Gehäuse (5') abnehmbar mit dem Arbeitsbehälter (1') verbunden ist.
